# EUROPÄISCHE PATENTSCHRIFT

(11) **EP 3 401 580 B1**
(45) Veröffentlichungstag und Bekanntmachung des Hinweises auf die Patenterteilung: **22.04.2020**
(21) Anmeldenummer: 18163150.8
(22) Anmeldetag: 21.03.2018
(51) Int. Cl.: F16K 41/12, F16K 7/12

(54) **HUBVENTIL**
LIFTING VALVE
SOUPAPE DE LEVAGE

(30) Priorität: 10.05.2017 DE 102017207933
(43) Veröffentlichungstag der Anmeldung: 14.11.2018
(73) Patentinhaber: Evoguard GmbH, 93149 Nittenau (DE)
(72) Erfinder: Justl, Johann, 93149 Nittenau (DE); Sauer, Martin, 93149 Nittenau (DE)
(74) Vertreter: Grünecker Patent- und Rechtsanwälte PartG mbB

(56) Entgegenhaltungen:
- DE-B1- 1 500 140
- US-A- 4 072 292

## Beschreibung

Die Erfindung betrifft ein Hubventil, insbesondere für aseptische Produktleitungen, gemäß dem Oberbegriff des Anspruchs 1 und wie bekannt aus US 4 072 292 A und DE 15 00 140 B1.

Hubventile werden als Sitzventile, Doppelsitzventile oder Regelventile für die Produktführung im Bereich der Lebensmittelherstellung, insbesondere in Getränkebehandlungs- und/oder Abfüllanlagen, verwendet. Sitzventile für hygienisch anspruchsvolle Anwendungen besitzen bekanntermaßen Hubstangendichtungen, um die Ventilkavität bei Hubbewegung abzudichten. Bei aseptischen Anwendungen ist eine hermetische Abdichtung der vom Produkt durchströmten Bereiche gegenüber der Umgebung und zugehörigen Antrieben und Steuerungen erforderlich. Zu diesem Zweck kann das in den Produktraum des Hubventils ragende Schließelement bekanntermaßen mittels eines Faltenbalgs oder einer tellerförmigen Membran hermetisch zum Ventilgehäuse hin abgedichtet werden.

Ein Hubventil mit einer in das Schließelement integrierten Tellermembran ist aus der EP 1 527 296 B1 bekannt. Die Membran wird an einer Ventilgehäuseseitigen Einspannstelle in axialer Richtung zwischen einem am Ventilgehäuse ausgebildeten Anschlag und einem Dichtungsring axial zusammengedrückt und auf diese Weise fixiert.

Die DE 10 2005 016387 B3 offenbart zudem ein Hubventil mit einer Tellermembran, die an einer inneren Einspannstelle am Schließelement und an einer äußeren Einspannstelle am Ventilgehäuse befestigt ist. Die Membran wird durch fächerartig ineinandergreifende Stützelemente stabilisiert, die am Deckel des Ventilgehäuses und am Schaft des Schließelements befestigt sind.

Für die Abdichtung derartiger Membranen zum Ventilgehäuse kommen sowohl Elastomer-Dichtungen als auch ein Presssitz ohne zusätzliche Dichtungen in Frage. Nachteilig bei Elastomer-Dichtungen ist die oft mangelhafte Beständigkeit gegenüber Produkten und/oder Reinigungsmedien. Ein Einspannen der Membranen mittels Presssitz birgt die Gefahr einer Membranüberlastung. Besonders problematisch ist das Einspannen der Membran an einem metallischen Anschlag im Ventilgehäuse unter definierter Vorspannung der Membran. Zudem muss gleichzeitig eine zuverlässige und hinterwanderungsfreie Abdichtung des Produktraums über eine möglichst lange Nutzungsdauer aufrechterhalten werden.

Zwar schlägt die US 4 666 166 eine Tellerfeder zum Einspannen einer ähnlich einem Balg gewölbten Membran am Ventilgehäuse vor. Jedoch ist dies nur für vergleichsweise dicke Membranen und ohne Vorspannung praktikabel.

Es besteht somit Bedarf für ein demgegenüber verbessertes Hubventil.

Die gestellte Aufgabe wird mit einem Hubventil gemäß Anspruch 1 gelöst. Demnach eignet sich dieses insbesondere für aseptische Produktleitungen. Das Hubventil umfasst ein Ventilgehäuse mit Leitungsanschlüssen und einem zwischen den Leitungsanschlüssen im Ventilgehäuse ausgebildeten Ventilsitz, ein im Ventilgehäuse axial verstellbares und mit dem Ventilsitz zusammenwirkendes Schließelement, und eine Membran, die sich um das Schließelement herum und von diesem bis zu einer gehäuseseitigen Einspannstelle erstreckt.

Erfindungsgemäß umfasst das Hubventil ferner ein federelastisches und insbesondere ringförmiges Element zum gehäuseseitigen Einspannen der Membran unter Vorspannung. Dabei ist das federelastische Element zur Einspannstelle hin in teilumfängliche Segmente unterteilt. An den Segmenten sind ferner Fortsätze ausgebildet, welche die Membran gegen die insbesondere zylindrische und/oder abschnittsweise konische Einspannstelle drücken und dabei zusammendrücken. Dabei wird die Membran elastisch komprimiert und vorzugsweise auch plastisch verformt, so dass sich die Fortsätze in der Membran verkrallen.

Die teilumfänglichen Segmente ermöglichen ein gleichmäßiges Andrücken der Membran entlang der gehäuseseitigen Einspannstelle und eine zuverlässige hermetische Abdichtung der Ventilkavität an der Einspannstelle.

Die Fortsätze sind derart ausgebildet, dass sie im montierten Zustand unter Kompression der Membran in diese eingreifen, ohne die Membran einzureißen. Die Membran wird dabei zumindest teilweise elastisch komprimiert und vorzugsweise plastisch, also dauerhaft, verformt. Die Fortsätze ermöglichen durch das Eindringen / Einkrallen in die Membran eine Verbindung zwischen dem federelastischen Element und der Membran im Bereich der abschnittweise zylindrischen und/oder konischen Einspannstelle in Zugrichtung, und damit insbesondere einen Schutz gegen ein Herausreißen der Membran aus der Einspannstelle. Durch die Zugkräfte auf die Membran und somit auf die Fortsätze werden die teilumfänglichen Segmente zusätzlich gegen die gehäuseseitige Dichtstelle, insbesondere gegen eine Abdichtkante, gepresst und erhöhen somit die Dichtwirkung.

Ergänzend könnten die Fortsätze und die Membran im Bereich der Einspannstelle auch an zueinander passend vorgeformten Bereichen ineinandergreifen. Das heißt, die Membran ist dann für den Formschluss vorgeformt, beispielsweise mit Ausnehmungen, die mit den Fortsätzen korrespondieren.

Das Ventilgehäuse hat vorzugsweise zwei Leitungsanschlüsse für ein Fluid, das beispielsweise ein Produkt, eine Produktkomponente, ein Reinigungsmittel, ein Versorgungsmedium oder dergleichen ist. Der Ventilsitz ist vorzugsweise am Übergang des Ventilgehäuses zu einem der Leitungsanschlüsse angeordnet.

Zwei gattungsgemäße Hubventile können jedoch ebenso in Reihenschaltung zu einem Doppelsitzventil kombiniert werden. Jedes Hubventil des Doppelsitzventils hat dann eine Membran, ein federelastisches Element und eine Einspannstelle, die gemäß Anspruch 1 oder wenigstens einer der beschriebenen Ausführungsformen zusammenwirken.

Die Membran ist zum hermetischen Abdichten der Ventilkavität ausgebildet, die vom Ventilgehäuse, Ventilsitz, Schließelement und von der Membran umgeben ist.

Das Schließelement umfasst beispielsweise einen Ventilteller und einen Ventilschaft. Die Membran ist entweder an einer weiteren Einspannstelle mit dem Schließelement verbunden oder einstückig mit diesem ausgebildet.

Unter einem Einspannen der Membran unter Vorspannung ist insbesondere zu verstehen, dass die Membran sowohl bei geschlossenem Hubventil als auch bei geöffnetem Hubventil elastisch zwischen dem Schließelement und der gehäuseseitigen Einspannstelle gedehnt wird.

Die Fortsätze sind vorzugsweise einstückig mit den teilumfänglichen Segmenten des federelastischen Elements ausgebildet. Die Fortsätze sind beispielsweise fingerförmig und/oder krallenförmig. Unter dem Begriff "federelastisch" ist zu verstehen, dass eine Federwirkung im Wesentlichen durch elastisches Verbiegen einzelner tragender Strukturen erzielt wird und nicht durch deren Kompression. Das federelastische Element wirkt somit prinzipiell als Federklemme.

Vorzugsweise weisen die teilumfänglichen Segmente in einem Kontaktbereich zur Membran ein abgerundetes und/oder gefastes Abdichtprofil auf. Mit dem Abdichtprofil wird eine umfänglich um das federelastische Element verlaufende Dichtkante bereitgestellt, die insbesondere elastisch in die Membran hineindrückt und diese über den gesamten Umfang der Einspannstelle hermetisch abdichtend gegen das Ventilgehäuse presst. Die einzelnen teilumfänglichen Segmente ermöglichen eine Formanpassung des federelastischen Elements an die Einspannstelle, beispielsweise bedingt durch Herstellungstoleranzen und/oder die in der Praxis vorliegenden Montagepositionen des federelastischen Elements und der Membran an der Einspannstelle.

Vorzugsweise stehen die Fortsätze von den teilumfänglichen Segmenten schräg nach außen und vom Ventilsitz wegweisend ab. Dies ermöglicht eine dauerhaft gleichbleibende axiale Position der Membran trotz Vorspannung und verhindert ein Herausreißen der Membran aus der Einspannstelle trotz der dynamischen Beanspruchung im Arbeitsbetrieb des Hubventils.

Vorzugsweise ist ein Abstand zwischen den teilumfänglichen Segmenten in einem Kontaktbereich zur Membran kleiner als die dortige Dicke der eingespannten Membran. Dadurch lässt sich eine zuverlässig hermetische Abdichtung auch in den zwischen den Segmenten liegenden umfänglichen Teilbereichen erzielen. Insbesondere kann ein Hinterwandern der Membran mit Produkt oder dergleichen am gesamten Umfang der Membran zuverlässig verhindert werden.

Vorzugsweise umfasst die Membran einen im Wesentlichen zylindrischen äußeren Randabschnitt, der zwischen den Fortsätzen und der Einspannstelle eingeklemmt ist. Der Randabschnitt ist vorzugsweise an die ursprüngliche, also noch unverformte Kontur des federelastischen Elements angepasst und derart elastisch ausgebildet, dass er sich beim Einbau in das Ventilgehäuse an die zylindrische Einspannstelle anpasst und dadurch die Fortsätze auf Vorspannung bringt.

Vorzugsweise umfasst das Hubventil ferner einen Verankerungsring zum Abstützen und formschlüssigen Verankern des federelastischen Elements am Ventilgehäuse und einen Stützring zum Abstützen der Membran unter Vorspannung, insbesondere bei geöffnetem Ventil. Der Befestigungsring und der Stützring sind form- oder stoffschlüssig miteinander verbunden, um das federelastische Element zwischen dem Befestigungsring und dem Stützring zu fixieren. Die Verbindung kann beispielsweise durch ein Gewinde, durch Bördeln, durch einen Bajonettverschluss oder vorzugsweise durch Schweißen hergestellt werden. Dies ermöglicht eine einfache Montage der Membran und des federelastischen Elements. Der Stützring ist insbesondere zum Abstützen eines radial außenliegenden Abschnitts der Membran ausgebildet.

Vorzugsweise umfasst das Hubventil ferner einen am Ventilgehäuse ausgebildeten metallischen Anschlag zum axialen Verankern des Verankerungsrings. Der metallische Anschlag ist insbesondere im Bereich einer Flanschverbindung zwischen Ventilgehäuse und Steuergehäuse ausgebildet. Der Verankerungsring kann bei getrennter Flanschverbindung eingelegt werden und ist bei geschlossener Flanschverbindung axial und gegebenenfalls auch radial im Ventilgehäuse fixiert.

Vorzugsweise weist der Stützring ein zum Ventilsitz hin im Wesentlichen konkav gekrümmtes Stützprofil für die Membran auf. Die Membran liegt dann vorzugsweise auf einer das Stützprofil vollumfänglich aufweisenden Stützfläche auf. Die konkave Krümmung ermöglicht eine gleichmäßige Vorspannung bei unterschiedlichen axialen Stellungen des Schließelements. Vorzugsweise umfasst das Hubventil ferner einen am Schließelement befestigten Stützkörper zum Abstützen der Membran insbesondere bei geschlossenem Ventil. Der Stützkörper ist insbesondere zum Abstützen eines radial innenliegenden Abschnitts der Membran ausgebildet. Der Stützkörper weist dann vorzugsweise ein konkav gekrümmtes Stützprofil auf, das zum Ventilsitz hin an dem Stützkörper ausgebildet ist. Dies ermöglicht eine gleichmäßige Vorspannung der Membran bei geschlossenem oder nahezu geschlossenem Ventil.

Vorzugsweise umfasst das Schließelement einen Ventilteller und einen Ventilschaft, wobei die Membran zwischen dem Ventilschaft und dem Stützkörper eingespannt ist. Ventilschaft und/oder Ventilteller können einstückig oder mehrteilig ausgebildet sein. Ventilteller, Ventilschaft und Stützkörper können beispielsweise mittels eines zentralen Bolzens miteinander verbunden sein.

Vorzugsweise besteht das federelastische Element aus einem Metall oder einem metallhaltigen Verbundwerkstoff. Dadurch lässt sich auch bei einem Nachlassen der Eigenspannung der Membran sicherstellen, dass das federelastische Element die Membran dauerhaft mit ausreichender Vorspannung an der Einspannstelle anpresst. Metalle oder metallhaltige Verbundwerkstoffe sind zudem besonders resistent gegen thermische Beanspruchungen und Beanspruchungen bei der Montage.

Vorzugsweise besteht das federelastische Element aus einem Kunststoff, insbesondere PEEK, oder einem kunststoffhaltigen Verbundwerkstoff. Dies ermöglicht eine vergleichsweise kostengünstige Herstellung des federelastischen Elements im Spritzguss oder dergleichen.

Vorzugsweise ist der Kunststoff oder kunststoffhaltige Verbundwerkstoff dann temperaturbeständig bis wenigstens 150°C und insbesondere bis wenigstens 200°C. Dies begünstigt einen Einsatz des Hubventils für hygienisch anspruchsvolle Behandlungen von Produkten, beispielsweise in Getränkebehandlungs- und/oder Abfüllanlagen, und insbesondere in/an aseptischen Produktleitungen.

Vorzugsweise ist das Hubventil insbesondere pneumatisch angetrieben und als Aseptik-Sitzventil, Aseptik-Doppelsitzventil oder Aseptik-Regelventil ausgebildet. Die gleichermaßen thermisch und mechanisch stabile Befestigung der hermetisch abdichtenden Membran lässt sich bei derartigen Ventilen besonders vorteilhaft anwenden.

Die gestellte Aufgabe wird ebenso mit einer Getränkebehandlungs- und/oder Abfüllanlage gemäß Anspruch 17 gelöst. Diese umfasst wenigstens ein Hubventil gemäß wenigstens einer der voranstehend beschriebenen Ausführungsformen.

Eine bevorzugte Ausführungsform der Erfindung ist in den Zeichnungen dargestellt. Es zeigen:
- Fig. 1: einen Längsschnitt durch das Hubventil;
- Fig. 2: eine Schrägansicht des federelastischen Elements;
- Fig. 3: einen Längsschnitt eines Teilbereichs der Fig. 1; und
- Fig. 4: einen Teilschnitt durch die Einspannstelle in einer Schrägansicht.

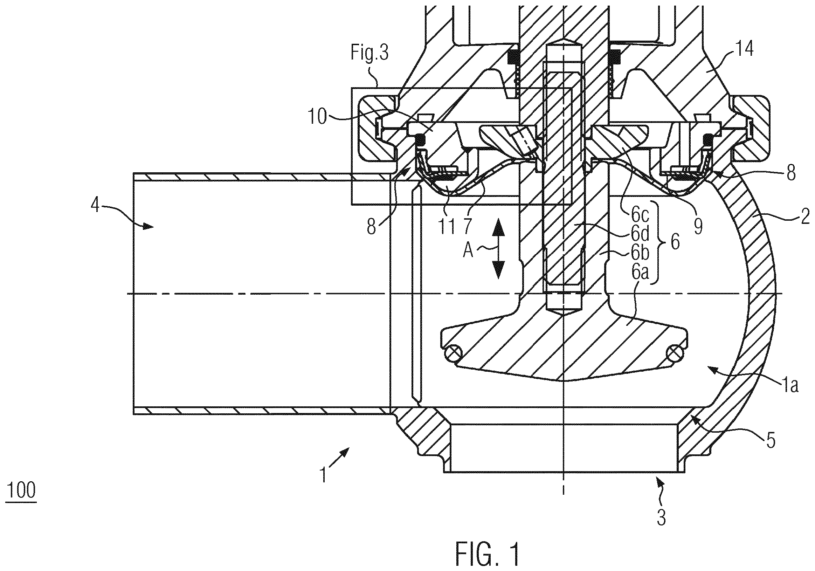

Wie die Fig. 1 erkennen lässt, ist das Hubventil 1 in einer bevorzugten Ausführungsform als Sitzventil mit einem Ventilgehäuse 2, einem ersten Leitungsanschluss 3 und einem zweiten Leitungsanschluss 4 für ein Fluid ausgebildet. Das Fluid ist ein Produkt, wie beispielsweise ein Getränk, eine Produktkomponente, ein Reinigungsmedium oder dergleichen. Das Ventilgehäuse 2 umschließt eine Ventilkavität 1a bis zu einem Ventilsitz 5 hin, der mit einem im Ventilgehäuse 2 in axialer Richtung A verstellbaren Schließelement 6 auf bekannte Weise zusammenwirkt.

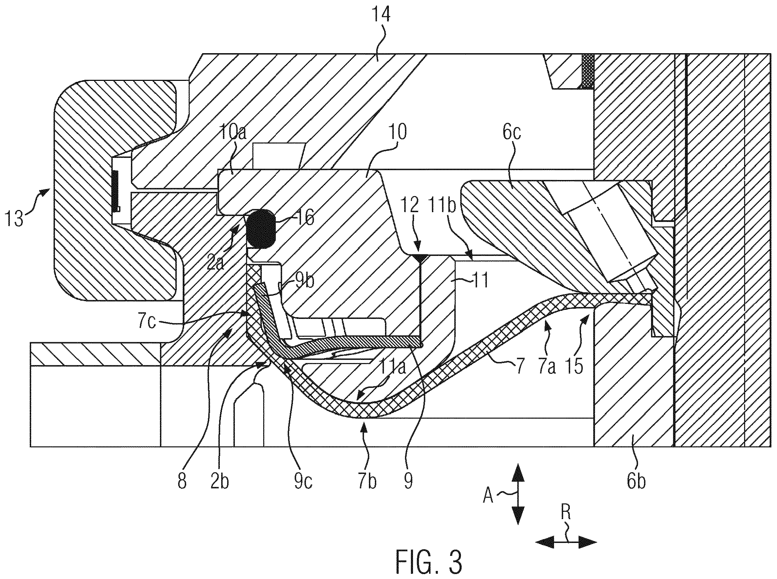

Das Schließelement 6 umfasst beispielsweise einen Ventilteller 6a, einen Ventilschaft 6b, einen Stützkörper 6c für eine Membran 7 und einen zentralen Verbindungsbolzen 6d. Die Membran 7 erstreckt sich tellerförmig und hermetisch abdichtend um das Schließelement 6 herum und von diesem bis zu einer gehäuseseitigen Einspannstelle 8. Die Membran 7 ist beispielsweise zwischen dem Ventilschaft 6b und dem Stützkörper 6c kraftschlüssig eingespannt. Ein radial innenliegender Abschnitt 7a der Membran 7 wird vom Stützkörper 6c insbesondere bei geschlossenem Hubventil 1 abgestützt, siehe auch die Fig. 3.

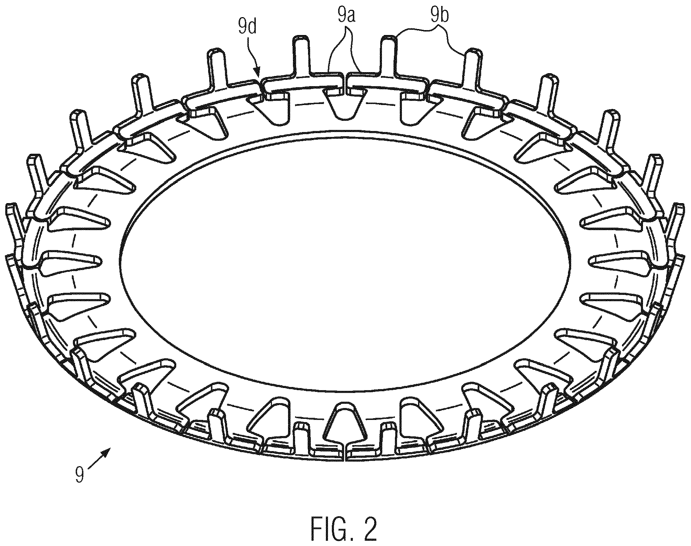

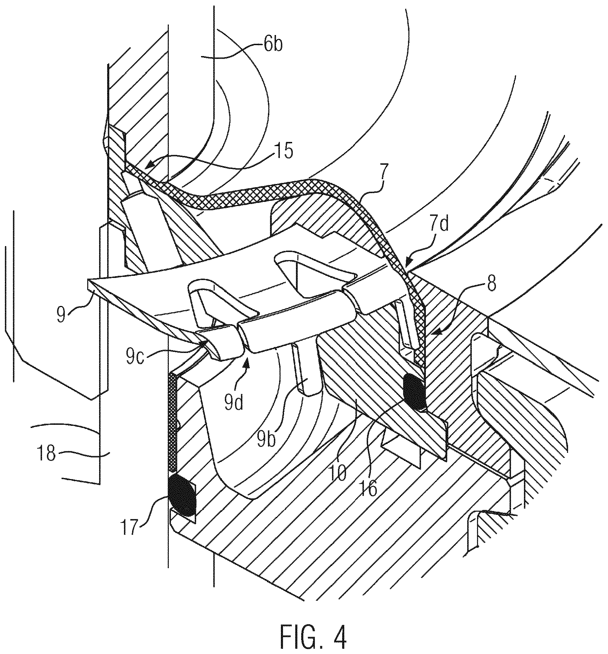

Die Membran 7 wird mit Hilfe eines federelastischen Elements 9 am gesamten Umfang einer Abdichtkante 2b im Bereich der Einspannstelle 8 abdichtend angedrückt. Wie die Fig. 2 erkennen lässt, ist das federelastische Element 9 im Wesentlichen als ringförmige Scheibe ausgebildet und nach außen hin in teilumfängliche Segmente 9a untergliedert, an denen fingerförmige und/oder krallenförmige Fortsätze 9b ausgebildet sind. Bezeichnet ist ferner ein Abstand 9d der teilumfänglichen Segmente 9a zueinander, siehe auch die Fig.4.

Das federelastische Element 9 besteht vorzugsweise aus einem Metall, einem metallhaltigen Verbundwerkstoff, einem Kunststoff oder einem kunststoffhaltigen Verbundwerkstoff. Metalle oder metallhaltige Verbundwerkstoffe lassen sich beispielsweise durch Laserschneiden, Wasserstrahlschneiden oder Drahterodieren auf geeignete Weise segmentieren. Als Kunststoff eignet sich insbesondere PEEK aufgrund seiner Temperaturbeständigkeit.

Wie die Fig. 3 und 4 im Detail zeigen, wird das federelastische Element 9 zwischen einem Verankerungsring 10 und einem Stützring 11 wenigstens in axialer Richtung A und vorzugsweise auch in radialer Richtung R fixierend eingeklemmt. Zu diesem Zweck sind der Verankerungsring 10 und der Stützring 11 an einer gemeinsamen Verbindungsstelle 12 miteinander verbunden.

Der Verankerungsring 10 umfasst an seiner Außenseite beispielsweise einen Bund 10a, der mit einem am Ventilgehäuse 2 ausgebildeten metallischen Anschlag 2a zur Festlegung der axialen Position des Verankerungsrings 10 und des federelastischen Elements 9 zusammenwirkt.

Vorzugsweise ist der metallische Anschlag 2a an einer Flanschverbindung 13 des Ventilgehäuses 2 zu einem benachbarten Steuergehäuse 14 oder dergleichen ausgebildet. Das Steuergehäuse 14 dient auf an sich bekannte Weise der axialen Betätigung des Schließelements 6 mittels eines pneumatischen Antriebs (nicht dargestellt) oder dergleichen. Dies ist an sich bekannt und daher nicht im Detail dargestellt.

Der Stützring 11 hat auf seiner dem Ventilsitz 5 zugewandten Seite ein vorzugsweise konvex gekrümmtes Stützprofil 11a, auf dem ein radial außenliegender Abschnitt 7b der Membran 7 aufliegt. Die dient zur Aufrechterhaltung einer Vorspannung in der eingespannten Membran 7 bei unterschiedlichen Stellungen des Schließelements 6 und insbesondere bei geöffnetem Hubventil 1. Außerdem wird die mechanische Belastbarkeit der Membran 7 durch abschnittsweise Abstützung am Stützring 11 und am Stützkörper 6c des Schließelements 6 erhöht.

Wie die Fig. 3 ferner erkennen lässt, kann der Stützkörper 6c des Schließelements 6 axial durch eine zentrale Ausnehmung 11b im Stützring 11 hindurchbewegt werden. Beim Schließen des Hubventils 1 kommt der Stützkörper 6c zunehmend in Kontakt mit dem radial innenliegenden Abschnitt 7a der Membran 7 und stützt diese vorzugsweise unter Beibehaltung einer Vorspannung der Membran 7 ab. Dies begünstigt eine gleichmäßige Beanspruchung der Membran 7 bei unterschiedlichen Stellungen des Schließelements 6.

Wie die Fig. 3 weiterhin erkennen lässt, haben die teilumfänglichen Segmente 9a in einem Kontaktbereich zur Membran 7 ein abgerundetes und/oder gefastes Abdichtprofil 9c. Damit wird eine segmentiert um das federelastische Element 9 herum verlaufende Dichtkante bereitgestellt, die vorzugsweise einer an dem Ventilgehäuse 2 ausgebildeten Abdichtkante 2b gegenüber liegt. Das Abdichtprofil 9c drückt in die Membran 7 und bewirkt durch deren Kompression einen hermetisch dichten Abschluss zum Ventilgehäuse 2. Die Kompression der Membran 7 durch das Abdichtprofil 9c ist vorzugsweise elastisch.

Ferner lässt die Fig. 3 erkennen, dass die Fortsätze 9b von den teilumfänglichen Segmenten 9a schräg nach außen und vom Ventilsitz 5 wegweisend abstehen. Mit Hilfe der Federspannung der Fortsätze 9b drücken sich diese verformend in einen im Wesentlichen zylindrischen Randabschnitt 7c der Membran 7 ein. Durch Kompression oder plastische Verformung der Membran 7 wird ein zuverlässiger Kraftschluss, beziehungsweise Formschluss zwischen den federelastischen Fortsätzen 9b und dem Randabschnitt 7c hergestellt und somit diese gegen Herausreißen gesichert. Ferner wird die Membran 7 nur partiell gegen die Einspannstelle 8 gedrückt, was ein vollständiges Abdichten auf der Einspannstelle 8 verhindert und somit eine Leckageerkennung bezüglich der Abdichtkante 2b ermöglicht.

Ergänzend wäre ein Formschluss des Abdichtprofils 9c und/oder der Fortsätze 9b mit der Membran 7 an zueinander passend vorgeformten Bereichen denkbar. An der Membran 7 könnten korrespondierende Ausnehmungen (nicht dargestellt) vorhanden sein, beispielsweise im Bereich ihres Randabschnitts 7c.

Um ein Hinterwandern der Abdichtkante 2b mit Fluid am gesamten Umfang der Membran 7 zuverlässig zu vermeiden, ist der Abstand 9d der teilumfänglichen Segmente 9a zueinander im Kontaktbereich mit der Membran 7 vorzugsweise kleiner als eine dortige Dicke 7d der eingespannten Membran 7. Dies ist in der Fig. 4 zu ebenso zu erkennen wie die im Wesentlichen zerstörungsfreie Kompression der Membran 7 durch das Abdichtprofil 9c. Ein Einreißen der Membran 7 an der Einspannstelle 8 und insbesondere an der Abdichtkante 2b wird somit vermieden und ein zuverlässiger Kraftschluss in axialer Richtung A und eine zuverlässige hermetische Abdichtung erzeugt.

Die Membran 7 ist vorzugsweise an einem schließelementseitigen Einspannbereich 15 zwischen dem Ventilschaft 6b und dem Stützkörper 6c eingeklemmt. Aufgrund der im Wesentlichen radialen Ausrichtung des schließelementseitigen Einspannbereichs 15 ist die mechanische Beanspruchung der tellerförmigen Membran 7 dort geringer als an der im Wesentlichen axial ausgerichteten gehäuseseitigen Einspannstelle 8. Außerdem lässt sich durch Kompression der Membran 7 zwischen dem Ventilschaft 6b und dem Stützkörper 6c auf relativ einfache Weise die erforderliche hermetische Abdichtung zum Steuergehäuse 14 herstellen.

Der Vollständigkeit halber dargestellt sind ein erster Dichtungsring 16 zur umfänglichen Abdichtung des Verankerungsrings 10 am Ventilgehäuse 2 und eine zweiter Dichtungsring 17 zur Abdichtung einer mit dem Schließelement 6 verbundenen Hubstange 18 zum Stellgehäuse 14 hin.

Das beschriebene Hubventil 1 kann als beispielsweise pneumatisch angetriebenes Aseptik-Sitzventil, Aseptik-Doppelsitzventil oder Aseptik-Regelventil ausgebildet sein. Das Hubventil 1 lässt sich besonders vorteilhaft in Getränkebehandlungsanlagen und/oder Abfüllanlagen (nicht dargestellt) einsetzen. Das Hubventil 1 kann vorteilhaft an aseptische Produktleitungen angeschlossen werden.

## Patentansprüche

1. Hubventil (1), insbesondere für aseptische Produktleitungen, umfassend: ein Ventilgehäuse (2) mit Leitungsanschlüssen (3, 4) und einem dazwischen im Ventilgehäuse (2) ausgebildeten Ventilsitz (5); ein im Ventilgehäuse (2) axial verstellbares und mit dem Ventilsitz (5) zusammenwirkendes Schließelement (6); und eine Membran (7), die sich um das Schließelement (6) herum und von diesem bis zu einer gehäuseseitigen Einspannstelle (8) erstreckt, **gekennzeichnet durch** ein federelastisches und insbesondere ringförmiges Element (9) zum gehäuseseitigen Einspannen der Membran (7) unter Vorspannung, wobei das federelastische Element (9) zur Einspannstelle (8) hin in teilumfängliche Segmente (9a) unterteilt ist mit daran ausgebildeten Fortsätzen (9b), die die Membran (7) gegen die Einspannstelle (8) drücken und dabei insbesondere unter elastischer und plastischer Verformung der Membran (7) zusammendrücken,.

2. Hubventil nach Anspruch 1, wobei die teilumfänglichen Segmente (9a) in einem Kontaktbereich zur Membran (7) ein abgerundetes und/oder gefastes Abdichtprofil (9c) aufweisen.

3. Hubventil nach Anspruch 1 oder 2, wobei die Fortsätze (9b) von den teilumfänglichen Segmenten (9a) schräg nach außen und vom Ventilsitz (5) weg abstehen.

4. Hubventil nach einem der vorigen Ansprüche, wobei ein Abstand (9d) zwischen den teilumfänglichen Segmenten (9a) in einem Kontaktbereich zur Membran (7) kleiner ist als die dortige Dicke (7d) der Membran (7).

5. Hubventil nach einem der vorigen Ansprüche, wobei die Membran (7) einen im Wesentlichen zylindrischen äußeren Randabschnitt (7c) umfasst, der zwischen den Fortsätzen (9b) und der Einspannstelle (8) eingeklemmt ist.

6. Hubventil nach einem der vorigen Ansprüche, wobei sich die Fortsätze (9b) des federelastischen Elements (9) durch plastische oder elastische Verformung des Randabschnitts (7c) in diesem verkrallen.

7. Hubventil nach einem der vorigen Ansprüche, wobei die Fortsätze (9b) des federelastischen Elements (9) derart gestaltet sind, dass zwischen der Einspannstelle (8) und dem Randabschnitt (7c) der Membran (7) keine vollständige Dichtwirkung erzeugt wird.

8. Hubventil nach wenigstens einem der vorigen Ansprüche, ferner mit einem Verankerungsring (10) zum Abstützen und formschlüssigen Verankern des federelastischen Elements (9) am Ventilgehäuse (2) und mit einem Stützring (11) zum Abstützen der Membran (7) unter Vorspannung insbesondere bei geöffnetem Hubventil (1), wobei der Befestigungsring (10) und der Stützring (11) miteinander form- oder stoffschlüssig verbunden sind, um das federelastische Element (9) dazwischen zu fixieren.

9. Hubventil nach Anspruch 8, ferner mit einem am Ventilgehäuse (2) ausgebildeten metallischen Anschlag (2a) zum axialen Verankern des Verankerungsrings (10).

10. Hubventil nach Anspruch 8 oder 9, wobei der Stützring (11) ein zum Ventilsitz (5) hin im Wesentlichen konkav gekrümmtes Stützprofil (11a) für die Membran (7) aufweist.

11. Hubventil nach einem der Ansprüche 8 bis 10, ferner mit einem am Schließelement (6) befestigten Stützkörper (6c) zum Abstützen der Membran (7) insbesondere bei geschlossenem Hubventil (1).

12. Hubventil nach Anspruch 11, wobei das Schließelement (6) einen Ventilteller (6a) und einen Ventilschaft (6b) umfasst und die Membran (7) zwischen dem Ventilschaft (6b) und dem Stützkörper (6c) eingespannt ist.

13. Hubventil nach einem der vorigen Ansprüche, wobei das federelastische Element (9) aus einem Metall oder einem metallhaltigen Verbundwerkstoff besteht.

14. Hubventil nach einem der vorigen Ansprüche, wobei das federelastische Element (9) aus einem Kunststoff, insbesondere PEEK, oder einem kunststoffhaltigen Verbundwerkstoff besteht.

15. Hubventil nach Anspruch 12, wobei der Kunststoff oder kunststoffhaltige Verbundwerkstoff temperaturbeständig bis wenigstens 150°C und insbesondere bis wenigstens 200°C ist.

16. Hubventil nach wenigstens einem der vorigen Ansprüche, das als insbesondere pneumatisch angetriebenes Aseptik-Sitzventil, Aseptik-Doppelsitzventil oder Aseptik-Regelventil ausgebildet ist.

17. Getränkebehandlungs- und/oder Abfüllanlage mit wenigstens einem Ventil (1) nach wenigstens einem der vorigen Ansprüche.

## Claims

1. A poppet valve (1), in particular for aseptic product lines, comprising: a valve housing (2) with line connections (3, 4) and a valve seat (5) formed therebetween in the valve housing (2); a closing element (6) which is axially displaceable in the valve housing (2) and which cooperates with the valve seat (5); and a membrane (7) extending around the closing element (6) and from the latter up to a fixing site (8) located on the housing side, **characterized by** a spring-elastic and in particular annular element (9) for fixing the membrane (7) under preload on the housing side, the spring-elastic element (9) being subdivided towards the fixing site (8) into partially circumferential segments (9a) and having formed thereon extensions (9b), which press the membrane (7) against the fixing site (8) and, in so doing, compress the membrane (7) especially under elastic and plastic deformation.

2. The poppet valve according to claim 1, wherein the partially circumferential segments (9a) have a rounded and/or chamfered sealing profile (9c) in a contact area with the membrane (7).

3. The poppet valve according to claim 1 or 2, wherein the extensions (9b) project at an oblique angle outwards from the partially circumferential segments (9a) such that they are directed away from the valve seat (5).

4. The poppet valve according to one of the preceding claims, wherein a distance (9d) between the partially circumferential segments (9a) is, in a contact area with the membrane 7, smaller than the thickness (7d) which the membrane (7) has there.

5. The poppet valve according to one of the preceding claims, wherein the membrane (7) has a substantially cylindrical outer edge portion (7c), which is clamped in position between the extensions (9b) and the fixing site (8).

6. The poppet valve according to one of the preceding claims, wherein the extensions (9b) of the spring-elastic element (9) dig into the edge portion (7c) through plastic or elastic deformation of the latter.

7. The poppet valve according to one of the preceding claims, wherein the extensions (9b) of the spring-elastic element (9) are configured such that the sealing effect produced between the fixing site (8) and the edge portion (7c) of the membrane (7) is not a complete sealing effect.

8. The poppet valve according to one of the preceding claims, further comprising an anchoring ring (10) for supporting and for form-fit anchoring of the spring-elastic element (9) on the valve housing (2), and a support ring (11) for supporting the membrane (7) under preload, in particular in the open condition of the poppet valve (1), the anchoring ring (10) and the support ring (11) being interconnected in a form-fit manner or by a material bond, so as to fix the spring-elastic element (9) therebetween.

9. The poppet valve according to claim 8, further comprising a metal stop (2a) formed on the valve housing (2) and used for axially anchoring the anchoring ring (10).

10. The poppet valve according to claim 8 or 9, wherein the support ring (11) has a support profile (11a) for the membrane (7), said support profile (11a) having a substantially convex curvature towards the valve seat (5).

11. The poppet valve according to one of the claims 8 to 10, further comprising a support body (6c) fixed to the closing element (6) and used for supporting the membrane (7), in particular in the closed condition of the poppet valve (1).

12. The poppet valve according to claim 11, wherein the closing element (6) comprises a valve disk (6a) and a valve stem (6b), and the membrane (7) is fixed in position between the valve stem (6b) and the support body (6c).

13. The poppet valve according to one of the preceding claims, wherein the spring-elastic element (9) consists of a metal or a metal-containing composite material.

14. The poppet valve according to one of the preceding claims, wherein the spring-elastic element (9) consists of a plastic material, in particular PEEK, or of a composite material containing plastic.

15. The poppet valve according to claim 12, wherein the plastic material or the composite material containing plastic is temperature resistant up to at least 150°C and in particular up to at least 200°C.

16. The poppet valve according to one of the preceding claims, which is configured as an in particular pneumatically driven aseptic seat valve, aseptic double seat valve or aseptic control valve.

17. A beverage treatment and/or filling plant comprising at least one valve (1) according to at least one of the preceding claims.

## Revendications

1. Soupape de levage (1), en particulier pour des lignes de produits aseptiques, comprenant : un boîtier de soupape (2) avec des connexions de ligne (3, 4) et un siège de soupape (5) formé entre elle dans le boîtier de soupape (2) ; un élément de fermeture (6) qui est réglable axialement dans le boîtier de soupape (2) et coopère avec le siège de soupape (5) ; et une membrane (7), qui s'étend autour de l'élément de fermeture (6) et de celui-ci jusqu'à un point de fixation côté boîtier (8), **caractérisée par** un élément élastique à ressort et en particulier annulaire (9) pour une fixation côté boîtier de la membrane (7) sous tension, dans laquelle l'élément élastique à ressort (9), vers le point de fixation (8), est subdivisé en segments partiellement circonférentiels (9a) avec des saillies (9b) formées dessus, qui pressent la membrane (7) contre le point de fixation (8) et ainsi en particulier compriment la membrane (7) sous déformation élastique et plastique.

2. Soupape de levage selon la revendication 1, dans laquelle les segments partiellement circonférentiels (9a) présentent un profil d'étanchéité arrondi et/ou chanfreiné (9c) dans une zone de contact avec la membrane (7).

3. Soupape de levage selon la revendication 1 ou 2, dans laquelle les saillies (9b) font saillie obliquement vers l'extérieur à partir des segments partiellement circonférentiels (9a) et à l'écart du siège de soupape (5).

4. Soupape de levage selon l'une des revendications précédentes, dans laquelle une distance (9d) entre les segments partiellement circonférentiels (9a) dans une zone de contact avec la membrane (7) est plus petite que l'épaisseur (7d) de la membrane (7).

5. Soupape de levage selon l'une des revendications précédentes, dans laquelle la membrane (7) comprend une partie de bord externe sensiblement cylindrique (7c) qui est serrée entre les saillies (9b) et le point de fixation (8).

6. Soupape de levage selon l'une des revendications précédentes, dans laquelle les saillies (9b) de l'élément élastique à ressort (9) s'accrochent dans la section de bord (7c) par une déformation plastique ou élastique en son sein.

7. Soupape de levage selon l'une des revendications précédentes, dans laquelle les saillies (9b) de l'élément élastique (9) sont conçues de manière à ne pas produire un effet d'étanchéité complet entre le point de fixation (8) et la section de bord (7c) de la membrane (7).

8. Soupape de levage selon au moins l'une des revendications précédentes, comportant en outre une bague d'ancrage (10) pour supporter et ancrer par liaison de forme l'élément élastique à ressort (9) sur le boîtier de soupape (2) et une bague de support (11) pour supporter la membrane (7) sous tension, en particulier lorsque la soupape de levage est ouverte (1), la bague de fixation (10) et la bague de support (11) étant reliées l'une à l'autre par liaison de forme ou de matière afin de fixer l'élément élastique à ressort (9) entre les deux.

9. Soupape de levage selon la revendication 8, comprenant en outre une butée métallique (2a) formée sur le boîtier de soupape (2) pour ancrer axialement la bague d'ancrage (10).

10. Soupape de levage selon la revendication 8 ou 9, dans laquelle la bague de support (11) a un profil de support (11a) pour la membrane (7) qui est essentiellement courbé de manière concave vers le siège de soupape (5).

11. Soupape de levage selon l'une des revendications 8 à 10, comprenant en outre un corps de support (6c) fixé à l'élément de fermeture (6) pour supporter la membrane (7), en particulier lorsque la soupape de levage (1) est fermée.

12. Soupape de levage selon la revendication 11, dans laquelle l'élément de fermeture (6) comprend une tête de soupape (6a) et une tige de soupape (6b) et la membrane (7) est fixée entre la tige de soupape (6b) et le corps de support (6c).

13. Soupape de levage selon l'une des revendications précédentes, dans laquelle l'élément élastique à ressort (9) est constitué d'un métal ou d'un matériau composite contenant du métal.

14. Soupape de levage selon l'une des revendications précédentes, dans laquelle l'élément élastique à ressort (9) est constitué d'un plastique, en particulier de PEEK, ou d'un matériau composite contenant du plastique.

15. Soupape de levage selon la revendication 12, dans laquelle le plastique ou le composite contenant du plastique est résistant à une température jusqu'au moins 150°C, et en particulier jusqu'à au moins 200°C.

16. Soupape de levage selon au moins l'une des revendications précédentes, qui est conçue en particulier comme une soupape à siège aseptique à commande pneumatique, une soupape à double siège aseptique ou une soupape à commande aseptique.

17. Installation de traitement et/ou de remplissage de boisson avec au moins une soupape (1) selon au moins l'une des revendications précédentes.
